# EUROPEAN PATENT APPLICATION

(11) **EP 4 261 600 A1**
(43) Date of publication of application: **18.10.2023**
(21) Application number: 22305544.3
(22) Date of filing: 14.04.2022
(51) Int. Cl.: G02C 7/02, G02C 13/00

(54) **CALCULATION MODULE CONFIGURED TO SELECT A BASE-CURVE OF A LENS ALLOWING THE LENS TO BE ADAPTED TO A FRAME OF AN EYEWEAR**

(71) Applicant: Essilor International, 94220 Charenton-Le-Pont (FR)
(72) Inventor: JOSSE, Arnaud, 94220 CHARENTON-LE-PONT (FR); MERCIER, Sylvain, 94700 MAISONS-ALFORT (FR); REGO, Carlos, 91330 YERRES (FR); BOUYNET, Damien, 94000 CRETEIL (FR)
(74) Representative: Korakis-Ménager, Sophie

(57) **Abstract**

Calculation module comprising a memory and a processor. The calculation module is configured to select an adapted semi-finished lens blank among a plurality of semi-finished lens blanks for manufacturing an ophthalmic lens to be mounted in a frame of an eyewear. The eyewear is intended to be worn by a user. The calculation module is configured to determine a geometrical parameter value of the ophthalmic lens to be manufactured from a test semi-finished lens blank of the plurality, the geometrical parameter value of the ophthalmic lens depending on a base-curve of the test semi-finished lens blank, a refractive index of the test semi-finished lens blank, a prescription of the user and/or a characteristic parameter value of the frame. The calculation module is configured to select the adapted semi-finished lens blank based on the geometrical parameter value of the ophthalmic lens.

## Description

### FIELD

Various aspects of this disclosure generally relate to the field of calculation modules and methods to select a semi-finished lens blank destined to manufacture a lens intended to be mounted in a frame of an eyewear.

### BACKGROUND

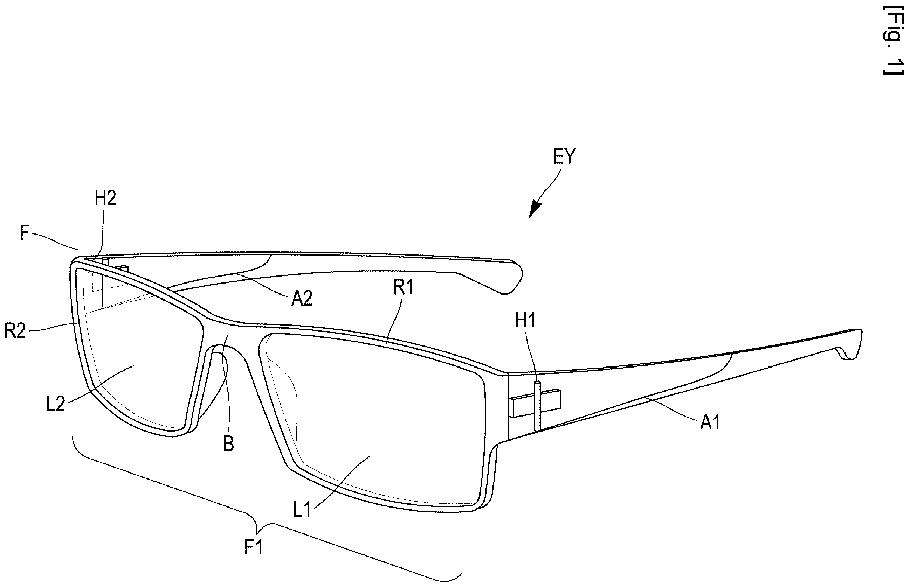

The figure 1 represents an eyewear EY. Eyewear is also known as eyeglasses. This eyewear EY comprises two lenses L1 and L2 (also known as ophthalmic lenses) and a frame F. The frame F comprises two arms or temples A1 and A2 and a front part F1. The front part F1 comprises a right rim R1 and left rim R2 linked together by a bridge B. The front part F1 and the two arms A1 and A2 are linked using two hinges H1 and H2. The hinges H1 and H2 allow the user to fold the arms A1 and A2 along the front part F1. The rims R1 and R2 of the frame F1 are configured to receive and to maintain the lenses L1 and L2.

The lens L1 or L2 and the frame F, more precisely the rims R1 or R2 receiving the lens must be adapted together. This adaptation must allow the lens L1 or L2 to be removably attached to the frame F. Generally, the user chooses the frame F according to aesthetic considerations and the lenses must be adapted to the parameters of the frame F.

When a user gets a new eyewear, during the consumer journey, the selection of a frame F is a key step. After that, the determination of the parameters of the lenses is usually driven by the user's optical needs, or simple base-curve matching between the frame F and the lenses L1 and L2. Base-curve matching is a method on which the base-curve of the lens is chosen as a base-curve close to the base of the frame F. However, the Eye Care Professional ECP has to evaluate the aesthetics of the final eyeglass by choosing the best possible combination of several input parameters to order the lenses. These combinations are numerous and will lead to different aesthetic solutions. Evaluating the absolute aesthetics of each combination can be difficult without a deep knowledge.

There is a need for a calculation module and method for adapting the parameters of the lens, more precisely to select a semi-finished lens blank destined to manufacture the lens intended to be mounted in a preselectionned frame F.

### SUMMARY

The following presents a simplified summary in order to provide a basic understanding of various aspects of this disclosure. This summary is not an extensive overview of all contemplated aspects and is intended to neither identify key or critical elements of all aspects nor delineate the scope of any or all aspects. The sole purpose is to present some concepts of one or more aspects in a simplified form as a prelude to the more detailed description that is presented later.

One aspect of this disclosure is a calculation module comprising a memory and a processor. The calculation module is configured to select an adapted semi-finished lens blank among a plurality of semi-finished lens blanks for manufacturing an ophthalmic lens to be mounted in a frame of an eyewear. The eyewear is intended to be worn by a user. The calculation module is configured to determine a geometrical parameter value of the ophthalmic lens to be manufactured from a test semi-finished lens blank of the plurality, the geometrical parameter value of the ophthalmic lens depending on a base-curve of the test semi-finished lens blank, a refractive index of the test semi-finished lens blank, a prescription of the user and/or a characteristic parameter value of the frame. The calculation module can also be configured to select the adapted semi-finished lens blank based on the geometrical parameter value of the ophthalmic lens.

The adapted semi-finished lens blank is one of the plurality allowing the geometrical parameter value of the ophthalmic lens to be within a range of geometrical parameter values.

Another aspect of this disclosure is a computer implemented method, for selecting an adapted semi-finished lens blank among a plurality of semi-finished lens blanks for manufacturing an ophthalmic lens to be mounted in a frame of an eyewear. The eyewear is intended to be worn by a user. The computer implemented method comprises a step of determining a geometrical parameter value of the ophthalmic lens to be manufactured from a test semi-finished lens blank of the plurality, the geometrical parameter value of the ophthalmic lens depending on a base-curve of the test semi-finished lens blank, a refractive index of the test semi-finished lens blank, a prescription of the user and/or a characteristic parameter value of the frame. The computer implemented method can also comprise a step of selecting the adapted semi-finished lens blank based on the geometrical parameter value of the ophthalmic lens.

The adapted semi-finished lens blank is one of the plurality allowing the geometrical parameter value of the ophthalmic lens to be within a predetermined range of the geometrical parameter values.

### DESCRIPTION OF THE DRAWINGS

For a more complete understanding of the description provided herein and the advantages thereof, reference is now made to the brief descriptions below, taken in connection with the accompanying drawings and detailed description, wherein like reference numerals represent like parts.
Figure 1 represents eyewear.
Figure 2 represents a system.
Figure 3 represents a method according to a first embodiment.
Figure 4 represents steps implemented to use a machine learning approach.

### DETAILED DESCRIPTION OF EMBODIMENTS

The detailed description set forth below in connection with the appended drawings is intended as a description of various possible embodiments and is not intended to represent the only embodiments in which the concepts described herein may be practiced. The detailed description includes specific details for the purpose of providing a thorough understanding of various concepts. However, it will be apparent to those skilled in the art that these concepts may be practiced without these specific details. In some instances, well-known structures and components are shown in block diagram form in order to avoid obscuring such concepts.

The lenses or ophthalmic lenses L1 and L2 comprise a front face and a rear face. The rear face of the lens is the face of the lens facing the user when the user is wearing the eyewear comprising the lens. The front face is the face of the lens opposite to the rear face.

The front face is also known as the "object side" face of the lens and the rear face is also known as the "eye side" face of the lens.

Conventionally, lenses are manufactured on request in accordance with specifications intrinsic to individual users (for example the prescription of the users, measured by an ophthalmologist or an eye care professional). However, lenses are commonly manufactured by using a limited number of semi-finished lens blanks. A semi-finished lens blank has a front face and a rear face. Generally, the physical parameters of the lenses (for example the thickness) depend on the prescription of the lens. Therefore, the prescription of the lens is generally taken into account while determining these physical parameters.

The front face of a semi-finished lens blank is usually intended to be the final front face of the final lens and the other face is machined so as the optical system of the final lens fits the user's ophthalmic prescriptions. Some minor machining of the front face may occur, but without modifying its curvature.

Therefore, the expressions "the base-curve of the lens", or "the base-curve of the semi-finished lens blank" on which the lens is manufactured can be indistinctly used, indeed both of these base-curves are identical.

Semi-finished lens blanks are usually obtained by injection moulding or by casting into moulds.

In this disclosure and according to ISO Standard 13666:1998(E/F) (Ophthalmic optics - Spectacle lenses - Vocabulary), the curvature of the front face of the lenses or the semi-finished lens blanks is called a "base-curve".

If the curvature of the front face of the semi-finished lens blank is not constant, as it is for example the case with a free-form shape of the front face, the curvature can be determined as the curvature at a reference point of the front face or an average curvature that is averaged over the whole front face.

Often, the base-curves are given for a nominal refractive index of 1.53, even if the material on which the ophthalmic lens is made of has another refractive index. In this divulgation all the base-curves will be given for a nominal refractive index of 1.53 whatever the exact refractive index of the material of the lens is. Therefore, when modifying the base-curve of the lens, only the curvature of the front face is modified and not the material. Similarly, a modification of the material of the lens will not be considered as a modification of the base-curve of the lens.

When the base-curve of a lens decreases, the lens becomes flatter. In contrast, when the base-curve of a lens increases, the lens becomes stepper or rounder. The expressions "decreasing the base-curve of the lens" and "flattering the lens" and the expressions "increasing the base-curve of the lens" and "steppering or rounding the lens" are interchangeable.

Manufacturers typically produce pluralities or series of semi-finished lens blanks, each plurality having its own "base-curve series". This "base-curve series" is a system of semi-finished lens blanks with the front face increasing incrementally in curvature (e.g., + 0.50 D, + 2.00 D, + 4.00 D, and so on).

Generally, the material or at least the refractive index of the same plurality is identical. Generally the material or at least the refractive index of two different pluralities are different.

Generally, each of the base-curve series comprises a limited number of discrete base-curves. Sometimes, each plurality does not have the same number of semi-finished lens blanks. Furthermore, all the pluralities do not have semi-finished lens blanks with the same base-curve. Therefore, when changing from a semi-finished lens blank of a first plurality to a semi-finished lens blank of a second plurality, a semi-finished lens blank with the same base-curve is sometimes not available. In this case, the semi-finished lens blank of the second plurality with the base-curve the closest to the base-curve of the semi-finished lens blank of the first plurality is selected.

The common trend is to limit the number of semi-finished lens blanks of a plurality to minimize the number of moulds, the stocking costs and inventory requirements. A standard plurality comprises less than twenty semi-finished lens blanks, for example less than ten, and preferably five to eight semi-finished lens blanks.

Each semi-finished lens blank in a plurality is conventionally used for producing a range of prescription.

The front face of a semi-finished lens blank serves as the starting point from which the optical face of the back face will be calculated and the final lens be manufactured according to a user prescription (or focal power).

The front face of the semi-finished lens blanks of a plurality may have a spherical shape, an aspherical shape, a progressive addition shape.

As an example, progressive addition lenses (PAL) may be manufactured thanks to semi-finished lens blanks with a front face of spherical or aspherical shape and the progressive addition face is obtained by machining the rear face of the semi-finished lens blank. Progressive addition lenses can also be manufactured using semi-finished lens blanks with a front face with progressive addition shape and the rear face of the semi-finished lens blank is machined so as to form a rear face with spherical or toric shape. It is also possible to manufacture PAL thanks to semi-finished lens blanks with a front face having a first progressive addition shape and to machine the rear face of the semi-finished lens blank to obtain a rear face with a second progressive addition shape and provide "dual add" PAL.

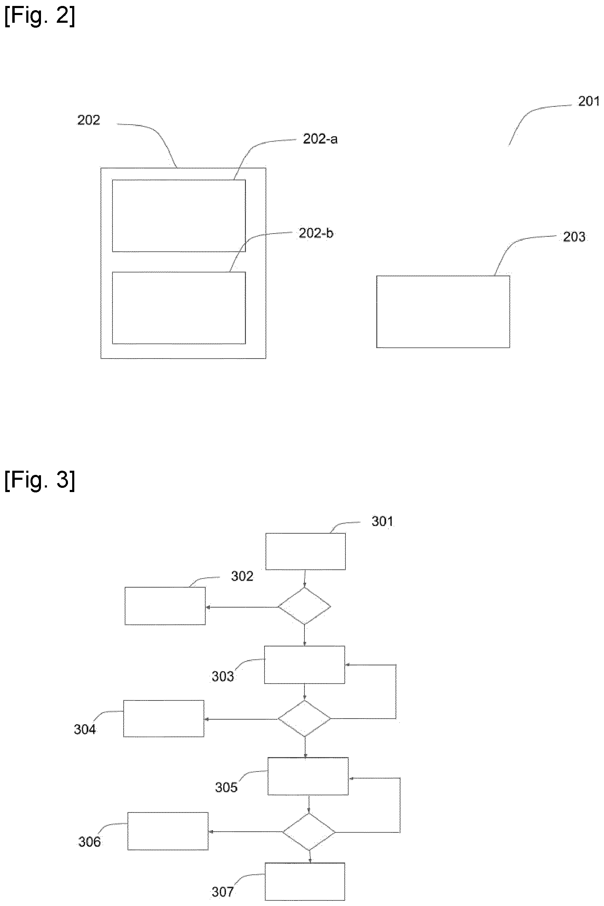

The figure 2 represents a system 201 comprising a calculation module 202. The calculation module 202 comprises a memory 202-a and a processor 202-b. The calculation module 202 is for example a computer, a mobile device like a smartphone. The calculation module 202 can also be a virtual machine located on a cloud network or a server not co-located with the user of the system 201.

Examples of processors 202-b include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware for example ASICs (Application-Specific Integrated Circuits) configured to perform the various functionality described throughout this disclosure.

The memory 202-a is computer-readable media. By way of example, and not limitation, such computer-readable media may include a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by the controller 102.

The memory 202-a can be configured to store a computer program comprising instructions which, when the program is executed by the processor 202-b, cause the calculation module 202 to carry out a method for selecting a semi-finished lens blank usable to manufacture the lens (L1 or L2) adapted to the frame F of the eyewear EY. The lens L1 or L2 is also adapted to a prescription of the user. The lens L1 or L2 is adapted to the frame F of the eyewear EY when a geometrical parameter value of the eyewear EY, more precisely of the lens L1 or L2 is within a range of geometrical parameter values.

The system 201 can also comprise a measurement device 203 to determine points of a border of the right rim R1 of the frame F, and/or points of a border of the left rim R2 of the frame F. This measurement device 203 is for example a 3D scanner or a measuring arm.

Using these points of the border of the right rim R1 or the border of the left rim R2, the base of the frame F can be determined. The base of the frame F can be defined as the base-curve for which the corresponding sphere best approximates the shape of the right rim R1 or the left rim R2.

The geometrical parameter can represent an aesthetic score of the assembly comprising the lenses and the frame. This geometrical parameter value of the lens (L1 or L2) can be directly determined or measured from a part of the eyeglass EY, for example from the physical features of the lens (L1 or L2) or the frame F. These features can be the lens surfaces, the lens edges, the lens bevel, the frame face, the frame groove, etc.

The method for selecting a semi-finished lens blank can also comprise the determination of different parameters used for the edging and/or for the mounting of the lens L1 or L2 in the frame F.

The semi-finished lens blank can be selected among at least one plurality of semi-finished lens blanks. For each of the semi-finished lens blanks of one of the pluralities, the base-curve of the semi-finished lens blank is different from the base-curve of the other semi-finished lens blanks. Each plurality forms one of the previously introduced "base-curve series".

As presented previously, the material or at least the refractive index of the same plurality is generally identical. Generally, the material or at least the refractive index of two different pluralities are different.

The semi-finished lens blanks of the plurality can be organized in an incremental or decremental order of the value of the base-curve. This organization either incrementally or decrementally allows an easier implementation of the method.

The different pluralities can be organized by incremental or decremental order of their refractive index. This organization either incremental or decremental allows an easier implementation of the method.

In a first embodiment presented in figure 3, the adapted semi-finished lens blank is one of the plurality allowing the geometrical parameter value of the ophthalmic lens (L1, L2) to be within a predetermined range of the geometrical parameter values. In this first embodiment, the method comprises a step of determining 301 a geometrical parameter value of the lens L1 or L2 to be manufactured from a first test semi-finished lens blank of a first plurality of semi-finished lens blanks. The geometrical parameter value of the lens L1 or L2 depends on a base-curve of the first test semi-finished lens blank, a refractive index of the first test semi-finished lens blank, a prescription of the user, a characteristic parameter value of the frame F and/or the edging and mounting parameter.

When the geometrical parameter value of the lens L1 or L2 is within the range of the geometrical parameter values the method also comprises a step of selecting 302 the adapted semi-finished lens blank as the first test semi-finished lens blank.

The test semi-finished lens blank can be chosen among the plurality as the semi-finished lens blank with the base-curve the highest one but inferior to the base of the frame F.

Generally, the plurality used in the step of determining 301 the geometrical parameter value of the lens L1 or L2 is the plurality with a material, used to realize semi-finished lens blanks, with the refractive index having the lowest value. For a given geometry, selecting a plurality having the material with the lowest value of refractive index allows the semi-finished lens blanks to be cheaper.

When the geometrical parameter value of the lens L1 or L2 is outside the range of the geometrical parameter values the method also comprises:
- a step of selecting 303 a second test semi-finished lens blank of the first plurality having a base-curve different from the one of the first test semi-finished lens blank,
The second test semi-finished lens blank can have a base-curve smaller than the one of the first test semi-finished lens blank.

Advantageously the step of selecting 303 the second test semi-finished lens blank selects a semi-finished lens blank of the first plurality of semi-finished lens blank allowing, after the potential manufacturing of the lens using the second test semi-finished lens blank, the geometrical parameter value of the lens L1 or L2 to be within the range of the geometrical parameter values.

In the first embodiment, the step of selecting 303 the second test semi-finished lens blank is realized until one of these conditions is reached:
1. The geometrical parameter value of the lens L1 or L2 is within in the range of the geometrical parameter values
2. The difference between the base-curve of the second test semi-finished lens blank and the base of the frame F is above a difference threshold.

The difference threshold can be for example 2, 3 or 4 dioptres. Advantageously the difference threshold is 3 dioptres. This difference threshold of 3 dioptres allows a more aesthetic integration of the lens in the frame F.

As presented in the figure 3, when the first condition is reached, the method comprises a step of selecting 304, as the adapted semi-finished lens blank, the semi-finished lens blank allowing the geometrical parameter value of the lens L1 or L2 to be within in the range of the geometrical parameter values.

As presented in the figure 3, when the second condition is reached the method comprises a step of selecting 305 a test semi-finished lens blank in a second plurality of semi-finished lens blanks. Advantageously the second plurality comprises semi-finished lens blanks made on a material with a refractive index higher than the refractive index of the semi-finished lens blanks of the first plurality. Using a material with a refractive index higher allows the lens to be thinner.

The base-curve of the test semi-finished lens blank of the second plurality is generally close or equal to the base-curve of the second test semi-finished lens blank of the first plurality. In this divulgation "close" means inferior to 2 dioptres, for example 1 dioptre advantageously 0.5 dioptre.

The method can directly output the test semi-finished lens blank of the second plurality as the adapted semi-finished lens blank.

Otherwise and as presented in figure 3, when the geometrical parameter value of the lens L1 or L2 is outside the range, the step of selecting 305 can comprise the selection of a further plurality. The refractive index of the semi-finished lens blanks of the further plurality is advantageously higher than the one of the semi-finished lens blanks of the previous plurality. The step of selecting 305 is realized until one of these conditions is reached:
1. The geometrical parameter value of the lens L1 or L2 is within the range of the geometrical parameter values
2. There is no other plurality of semi-finished lens blanks.

When the first condition is reached, the method comprises a step of selecting 306 the semi-finished lens blank allowing the geometrical parameter value of the lens L1 or L2 to be within the range of the geometrical parameter values.

When the second condition is reached, the method comprises a step of selecting 307 the semi-finished lens blank allowing the geometrical parameter value of the lens L1 or L2 to be the closest to the range of the geometrical parameter values.

As described above the geometrical parameter can represent an aesthetic score of the assembly comprising the lenses and the frame. This geometrical parameter value of the lens (L1 or L2) can be directly determined or measured from a part of the eyeglass EY, for example from the physical features of the lens (L1 or L2) or the frame F. The geometric parameter of the lens can be:
- a thickness of a central part of the lens,
- a thickness of a peripheral part (edge) of the lens. The thickness of the edge of the lens can be considered before the edging of the lens or after the edging of the lens. In the last case parameters of the eyewear EY more precisely the shape of the rim of the eyewear EY can be taken into account,
- an average, a maximum value, a minimum value, a weighted sum of the thickness,
- a base-curve deviation (on lens, frame, or bevel) for example the curvature deviation from the bevel curvature to the front face of the lens L1 or L2 curvature or the curvature deviation from the bevel curvature to the frame face or frame groove curvature. This geometrical parameter is a deviation expressed in dioptres. In order to compare several deviation values the absolute deviation value is weighted by a coefficient.
- front distances, defined as distances at the lens edge from the bevel apex to the front face of the lens, this front distance will account for the lens protrusion in the front of the eyeglass its depend on the frame shape and size parameter and the mounting rule
- back distances, defined as the distances at the lens edge from the bevel apex to the back face of the lens, the back distances will account for the lens protrusion in the back of the eyeglass; it depends on the frame shape and size parameter, the mounting rule and the prescription.
- an average, a maximum value, a minimum value, a weighted sum of the front distances and the back distances.

A linear combination of these previous geometric parameters can also be used.

The following characteristic parameters of the frame F are usable to determine one of the geometric parameters presented above:
- Parameters of the frame F: sizing and base curvature values
- Parameters related to the mounting of the lens (L1 or L2) inside the rim (R1 or R2) : bevel shape and location at the lens edge. The linear combination of all or part of these previous geometric parameters can also be used.
- The mounting rules are for example:
- Follow Front, (FF) the bevel shape is established so that its guide curve follows the lens front face of the lens.
- Ratio, (R%) the bevel shape is established so that its guide curve split the contour thicknesses of the lens at a given ratio value; the ratio value may be ½ or %
- Forced Curve, (FC) the bevel shape is established so that its guide curve fits a given base curve.

The following characteristic parameters can also be used to determine one of the geometric parameters presented above:
- Parameters of the lens (L1 or L2) for example the user prescription, at least sphere, cylinder axis, (addition and prism), the lens front face curvature, the material refractive index of the lens,
- Physiological parameters of the user for example inter pupillary distance,
- Fitting parameters, fitting height, vertex distance, pantoscopic angle.

The range of the geometrical parameter values can depend on a type of the frame F and/or a tint of the lens.

When the geometric parameter is the thickness of the edge of the lens, the range of the geometrical parameter values can be chosen as one the following ranges:
- Less than 7.5mm
- Between 7.5mm and 10mm
- More than 10mm.

Using the above presented method the widest possible refraction coverage can be obtained while maintaining a suitable aesthetics, by selecting the semi-finished lens blank (according to the base-curve and the material of the semi-finished lens blank). This selection allows the thicknesses of the lens to be within a predetermined range and the base-curve of the lens to be adapted to the base of the frame. As described previously, the method can also comprise the determination of different parameters used for the edging and/or for the mounting of the lens (L1 or L2) in the frame F.

In other words, the method of this divulgation allows the use of aesthetic rules to determine semi-finished lens blank, more precisely its base-curve and its material, that will be used to manufacture the lens.

The aesthetic rules involve defining aesthetic limits in terms of thickness of the lenses but also on base-curve matching between the base-curve of the lens and the base of the frame F. The method comprises a base-curve management and a material lens management. Both of these managements can be based on the optimisation of the thickness of the lens. The thickness of the lens is optimized by debasing the lenses (flatter) and choosing a refractive index adapted to the prescription.

A database can comprise, for different semi-finished lens blanks (characterized by their base-curves, material) and prescriptions, the value of different geometrical parameters of the lens L1 or L2.

The method can also output an aesthetic score of the lens (for example based on the geometrical parameters of the lens, such as the thickness of the lens) associated with the selected base-curve and material.

The method can also comprise different levels of aesthetic and for each level different threshold of the geometrical parameters.

In the method, the test semi-finished lens blank that is selected in the beginning can be adapted to the base of the frame F. To ease the implementation of the method the base of different possible frames can be grouped in ranges of bases. Each range is associated with a base-curve of a test semi-finished lens blank to select at first. For example, each range, except the first one that can cover 4 dioptres, covers two dioptres. At first a test semi-finished lens blank with its base-curve equal to the low limit of the range on which the base-curve of the frame belongs is selected. The selection of the low limit allows the lens to be flatter, therefore the lens to be thinner.

Therefore,
- For frame bases from 0 to 3.9, in the beginning a test semi-finished lens blank with a base-curve of 2 can be used.
- For frame bases from 4 to 5.9, in the beginning a test semi-finished lens blank with a base-curve of 4 can be used.
- For frame bases from 6 to 7.9, in the beginning a test semi-finished lens blank with a base-curve of 6 can be used.
- For frame bases from 8 and up to 8, in the beginning a test semi-finished lens blank with a base-curve of 8 can be used.

When the geometrical threshold is the thickness of the lens, this thickness can be defined according to aesthetic levels. For a first level of aesthetic the edge thickness must be of a maximum of 7.5mm, for a second level of aesthetic the edge thickness must be between 7.5mm and 10mm and for a third level of aesthetic, the edge thickness can be superior to 10mm.

The more the base-curve of the lenses are curved, the thicker the lenses are. The base-curve 8 shows maximum edge thicknesses. The choice of polar (with film thickness constraints) and a large diameter Uncut product shows the worst case.

Using the above presented method, the aesthetics of the eyewear EY more precisely the lenses is optimized by changing their bases-curve and material of the semi-finished lens blank used to realize the lens. Lowering a flatter base-curve allows to maintain a suitable aesthetic (1 to 3 flatter bases maximum) and as previously explained, this allows to reduce the thicknesses.

By combining with the choice of the flatter base-curve, a change of refractive index of the material of the lens allows the reduction of the thickness of a peripheral part of the lens and so to obtain a more aesthetic lens mounted in the frame.

The method of the figure 3 can be for example used for myopic lenses (i.e. having a negative mean power). Especially for this kind of lens; the higher the absolute value of the power the higher, the thickness of the lens at its periphery. This method can be useful to obtain a lens fulfilling the prescription and having a reduced thickness at its periphery. In the following thickness implicitly means thickness at the periphery of the uncut lens or thickness at the periphery of the edged lens.

The method of the figure 3 can also be used with hyperopia lenses (i.e.having a positive mean power). In this case the geometrical parameter of the lens can be the base-curve deviation. The geometrical parameter can also be related to the edging of the lens or the mounting of the lens on the frame.

This section is an example, for illustrative purposes only, of how the method of the figure 3 can be used. The following table describes the plurality P1 to P3 comprising the semi-finished lens blank SF1 to SF5 used in this example:

| | P1 | P2 | P3 |
|---|---|---|---|
| SF1 | Base-curve 2 | Base-curve 2 | Base-curve 2.5 |
| SF2 | Base-curve 4 | Base-curve 4 | Base-curve 4.5 |
| SF3 | Base-curve 6 | Base-curve 6 | Base-curve 6.5 |
| SF4 | Base-curve 8 | Base-curve 8 | Base-curve 8.5 |
| SF5 | Base-curve 10 | Base-curve 10 | Base-curve 10.5 |

The first plurality P1 has a refractive index of 1.53, the second plurality P2 has a refractive index of 1.59 and the third plurality has a refractive index 1.67.

The base of the frame F is in this example of 6.6. The geometrical parameter of the lens L1 or L2 can be the thickness of the edge of the lens L1 or L2. The range of the geometrical parameter values is in this example 1 mm to 7 mm. The base-curve threshold is in this example 3 dioptres.

At first the semi-finished lens blank SF3 of the plurality P1 is considered. Indeed, the base-curve of the semi-finished lens blank SF3 of the plurality P1 is the one matching with the base of the frame F. If, in this example, the thickness of the lens, that could be realized from the semi-finished lens blank SF3 of the plurality P1, is 9 mm, this thickness is outside of the range of the geometrical parameter values and therefore the semi-finished lens blank SF3 of the plurality P1 is not adapted.

The semi-finished lens blank SF2 of the plurality P1 is then considered. If, in this example, the thickness of the lens, realized based on the semi-finished lens blank SF2 of the plurality P1, is 8 mm, again outside the range of the geometrical parameter values and therefore the semi-finished lens blank SF2 of the plurality P1 is not adapted.

The next semi-finished lens blank to be considered is the semi-finished lens blank SF1 of the plurality P1. It has a base-curve of 2 and as the difference with the base of the frame is greater than 3 dioptres, this semi-finished lens blank SF1 does not fulfil the above-mentioned base-curve threshold.

The plurality P2 is then considered and more precisely the semi-finished lens blank SF2 of this plurality. If, in this example, the thickness of the lens realized based on the semi-finished lens blank SF2 of the plurality P2 is 7.5 mm, this thickness is outside the range of the geometrical parameter values and therefore the semi-finished lens blank SF2 of the plurality P2 is not the adapted one. The plurality P3 is considered and more precisely the semi-finished lens blank SF2. The base curve of the semi-finished lens blank SF2 of the plurality P3 is not equal to the base curve of the semi-finished lens blank SF2 of the plurality P2, however the semi-finished lens blank SF2 of the plurality P3 is the one with the base-curve the closest to the semi-finished lens blank SF2 of the plurality P2.

If, in this example, the thickness of the lens realized based on the semi-finished lens blank SF2 of the plurality P3 is 6.9 mm, this thickness is within the range of the geometrical parameter values and therefore the semi-finished lens blank SF2 of the plurality P3 is the adapted semi-finished lens blank.

The modification of the base-curve allows a reduction of 10% of the thickness of the lens and a modification of the material of the lens allows a reduction of 18% of the thickness of the lens. The combination of both modifications allows a reduction of 26% of the thickness of the lens.

In a second embodiment the method for selecting a semi-finished lens blank usable to manufacture the lens (L1 or L2) adapted to the frame F of the eyewear EY can be realized by determining for a plurality of eyewear with lens manufactured using different semi-finished lens blanks at least one geometrical parameter value of the lens. After that the method can comprise the selection of the semi-finished lens blank based on the at least one geometrical parameter value. For example, the semi-finished lens blank associated with a geometrical parameter value within the range of geometrical parameter values of the first embodiment or semi-finished lens blank associated with the optimal geometrical parameter value can be selected.

As already mentioned, the geometrical parameter value can be represented as part of an aesthetic score of the assembly comprising the lenses L1 and L2 and the frame F. This geometrical parameter can be directly determined or measured from a part of the eyeglass EY, for example from the lens (L1 or L2) or the frame F. In other words, each of the geometric parameter values can be combined and weighted to each other so that a global aesthetic score can be determined.

Many configurations of eyewear EY can be evaluated combining a semi-finished lens blank (associated potentially with a base-curve and a material), edging and mounting rules associated with the frame intended to receive the lenses (L1 and L2) and the prescription of the user applied on the lenses (L1 and L2). The method will determine for each configuration at least one geometrical parameter value or a global aesthetic score obtained by combining the value of a plurality of geometrical parameters.

The advantage of the method is to predict for a plurality of eyewear EY a geometric parameter value of the eyewear EY or of the lens, without a full calculation of the parameters of the lens. This full calculation is time consuming and does not allow a real time evaluation.

To realize the determination of the geometrical parameter value of the lens L1 or L2 or the global aesthetic score, a supervised machine learning approach can be used. For example, a convolutional neural network can be used.

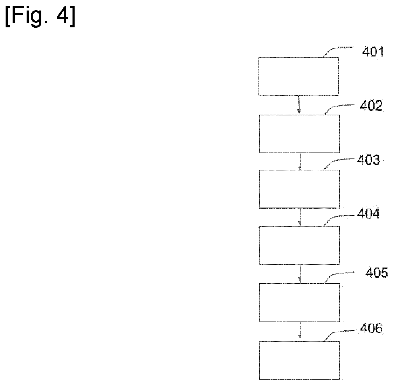

The use of the machine learning can be realized using the following steps represented in figure 4:
- A step of determining 401, for each semi-finished lens blanks of a plurality of model finished lens blanks and a plurality of edging and mounting rules, a plurality of geometrical parameter values of the lens L1 or L2,
- A step of training 402 a machine learning model using the data determined during the step 401,

Once the predictive model is trained, the method comprises:
- A step of receiving 403 inputs parameters representing a plurality of test eyewear EY using different semi-finished lens blanks and edging and mounting rules,
- A step of determining 404, using the machine learning model, for each test eyewear EY a geometrical parameter value of the lens L1 or L2 ,
- A step of selecting 406 the test semi-finished lens blank associated with an optimal geometrical parameter value of the lens L1 or L2 .

When during the step of determining 404 the geometrical parameter value, a plurality of geometrical parameter values are determined, the method can comprise a step of determining 405 a global score based on the plurality of geometrical parameter values. In this case during the step of selecting 406, the eyewear EY associated with the optimal global score is selected.

During the step of selecting 406, the geometrical parameter values of the lens L1 or L2 associated with different eyewear EY can be compared to a range of geometrical parameter values. The semi-finished lens blank allowing the geometrical parameter value of the lens to be within the range of geometrical parameter values is selected. The Pareto-optimal semi-finished lens blank can also be selected.

The geometric parameters used in the second embodiment are identical to the ones used in the first embodiment. As a reminder these geometric parameters are:
- a thickness of a central part of the lens,
- a thickness of a peripheral part (edge) of the lens. The thickness of the edge of the lens can be considered before the edging of the lens or after the edging of the lens. In the last case parameters of the eyewear EY more precisely the shape of the rim of the eyewear EY can be taken into account,
- an average, a maximum value, a minimum value, a weighted and normalized sum of the thicknesses,
- a base-curve deviation (on lens, frame, or bevel) for example the curvature deviation from the bevel curvature to the front face of the lens L1 or L2 curvature or the curvature deviation from the bevel curvature to the frame face or frame groove curvature,
- front distances, defined as distances at the lens edge from the bevel apex to the front face of the lens or
- back distances, defined as the distances at the lens edge from the bevel apex to the back face of the lens,
- an average, a maximum value, a minimum value, a weighted and normalized sum of the front distances and/or the back distances.

A linear combination of these previous geometric parameters can also be used.

The following characteristic parameters of the frame F are usable to determine one or more of the geometric parameters presented above:
- Parameters of the frame F : sizing and base curvature values
- Parameters related to the mounting of the lens (L1 or L2) inside the rim (R1 or R2) : bevel shape and location at the lens edge. The linear combination of all or part of these previous geometric parameters can also be used.

The following characteristic parameters can also be used to determine one of the geometric parameters presented above:
- Parameters of the lens (L1 or L2) for example the user prescription, at least sphere, cylinder axis, (addition and prism), the lens front face curvature, the material refractive index of the lens,
- Physiological parameters of the user for example inter pupillary distance,
- Fitting parameters, fitting height, vertex distance, pantoscopic angle and wrap angle.

Each of the eyewear of the first and second plurality are different from the others. More precisely, the shape of the frame F (more precisely the base-curve of the frame F), the prescription, the material (more precisely the refractive index of the material) and the base-curve of the lens L1 or L2 are different.

The machine learning model can also be used the following way. From an order of a lens to a user, the machine learning model is used with each possible eyewear EY (defined specifically by the base-curve of the semi-finished lens blank and the material of the semi-finished lens blank) to determine geometrical parameter values of the lens. Then, the eyewear EY associated with the optimal geometrical parameter value is selected. The optimal values provide the most aesthetic eyewear EY.

The method of the figure 4 has the advantage of allowing the determination of an efficient semi-finished lens blank (used to manufacture the lens) during the ordering process. This method also allows the Eye Care Professional to select a limited input parameter to apply to several combinations and determine the best one from an aesthetic point of view.

As an example, the method of the second embodiment can be used with the following parameters:
- A frame with size A = 56.3 mm, size B = 36.1 mm, size D = 15.9 mm, base curve = 6 dioptres, the sizes A, B and D are defined in the document "The vision council data standard" v3.12 (2018), https://www.thevisioncouncil.org/sites/default/files/DCS-v3_12_FINAL_v2.pdf. A or HBOX is the frame horizontal boxed lens size expressed in mm. B or VBOX is the frame vertical boxed lens size expressed in mm. D or DBL is the distance between lenses expressed in mm.
- Prescription: sphere = -4.25 dioptres, cylinder = 0.00 dioptre,
- Physiological parameters of the user: half pupillary distance = 31.3 mm, fitting height = 22.1 mm
- Mounting type is follow front.

The geometrical parameters are determined for the three following semi-finished lens blanks:
- The first semi-finished lens blank SF1 is made of a first material of refractive index = 1.502 and has a base-curve of 6.18 dioptres,
- The second semi-finished lens blank SF2 is made of the first material of refractive index = 1.502 and has a base-curve of 4.25 dioptres
- The third semi-finished lens blank SF3 is made of a second material of refractive index = 1.591 and has a base-curve of 6.46 dioptres.

Using the machine learning model, the value of the following geometrical parameters can be determined:
- the frame curvature geometrical parameter (C1), defined as the normalized deviation from the bevel curvature to the frame curvature.
- the lens curvature geometrical parameter (C2), defined as the normalized deviation from the bevel curvature to the surface curvature of the lens.
- the front distances geometrical parameter (C3), defined as the weighted and normalized sum of the distances from the bevel apex to the front surface.
- the back distances geometrical parameter (C4), defined as the weighted and normalized sum of the distances from the bevel apex to the back surface.

C1, C2, C3 and C4 are unit-less parameters.

The values of the geometrical parameters are represented in the following table. All of the values are obtained using the machine learning model. Because of the "follow front" mounting type the value of the parameter C3 is the same for all the semi-finished lens blank SF1 to SF3.

| Id | Rx | Lens base curve | Mountin g Rule | Frame base Curve | Material refractive index | C1 | C2 | C3 | C4 |
|---|---|---|---|---|---|---|---|---|---|
| SF1 | -4.25 | 6.18 | FF | 6.00 | 1.502 | 0.015 | 0.00 | 0.22 | 0.87 |
| SF2 | -4.25 | 4.25 | FF | 6.00 | 1.502 | 0.22 | 0.00 | 0.22 | 0.78 |
| SF3 | -4.25 | 6.46 | FF | 6.00 | 1.591 | 0.05 | 0.00 | 0.22 | 0.64 |

Using these values, a global aesthetic score can be determined. For example, this global aesthetic score can be the sum of the value of the four geometrical parameters.

Using the global aesthetic score, the semi-finished lens blank SF3 provides the best aesthetics and is selected.

Alternatively. The selection can be made on a unique geometric parameter for example on the geometrical parameter C1 if this parameter is considered to be the most important one.

The method, according to the second embodiment, can also comprise the determination of a plurality of optimal configurations, more precisely of optimal semi-finished lens blanks associated potentially with optimal mounting and edging rules and to display to an eye care professional the plurality of the optimal semi-finished lens blanks and potentially the optimal mounting and edging rules. These semi-finished lens blanks or the mounting and edging rules can be optimal in the sense of « Pareto».

The aesthetics of eyeglasses can be described by several geometrical parameters, as has been previously explained. When considering a plurality of semi-finished lens blanks, there can be one that is better than all other, for all geometrical parameters. This semi-finished lens blank is clearly optimal. However, an optimal semi-finished lens blank does not always exist. This is especially true if some of the geometrical parameters are antagonistic, such as "lens thickness" and "curvature deviation between the lens front curvature and the frame curvature". In the case where no optimal semi-finished lens blank exists. In this case a sub-set of Pareto-optimal semi-finished lens blanks can be determined.

By definition, a "dominated semi-finished lens blank" is a semi-finished lens blank for which there exists another semi-finished lens blank which is better or equal for all parameters.

If a semi-finished lens blank is not dominated, then it is Pareto-optimal. In other words, a Pareto-optimal semi-finished lens blank cannot be improved according to one parameter, without making it worse according to another parameter. In simpler terms: Pareto-optimal semi-finished lens blanks represent the set of "optimum compromises". They are a subset of the plurality of the semi-finished lens blanks.

## Claims

1. Calculation module (202) comprising a memory (202-a) and a processor (202-b), the calculation module (202) being configured to select an adapted semi-finished lens blank among a plurality of semi-finished lens blanks for manufacturing an ophthalmic lens (L1, L2) to be mounted in a frame (F) of an eyewear (EY),
the eyewear (EY) being intended to be worn by a user,
the calculation module (202) being configured:
- to determine a geometrical parameter value of the ophthalmic lens (L1, L2) to be manufactured from a test semi-finished lens blank of the plurality, the geometrical parameter value of the ophthalmic lens (L1, L2) depending on a base-curve of the test semi-finished lens blank, a refractive index of the test semi-finished lens blank, a prescription of the user and/or a characteristic parameter value of the frame (F),
- to select the adapted semi-finished lens blank based on the geometrical parameter value of the ophthalmic lens (L1, L2).

2. Calculation module (202) according to the claim 1,
the test semi-finished lens blank being a first test semi-finished lens blank,
when the geometrical parameter value of the ophthalmic lens (L1, L2) is outside the range of the geometrical parameter values the calculation module (202) is also configured to:
- select a second test semi-finished lens blank of the plurality,
the base-curve of the first test semi-finished lens blank being greater than the base-curve of the second test semi-finished lens blank,
the adapted semi-finished lens blank being the second test semi-finished lens blank.

3. Calculation module (202) according to the claim 2,
the calculation module (202) being also configured to:
- select sequentially an intermediate test semi-finished lens blank of the plurality in an decreasing order of a value of the base-curve,
- determine an intermediate geometrical parameter value of the ophthalmic lens (L1, L2) to be manufactured from the intermediate test semi-finished lens blank,
- repeat select and determine until the intermediate geometrical parameter value of
the ophthalmic lens (L1, L2) is within in the range of the geometrical parameter values, the adapted semi-finished lens blank being the intermediate semi-finished lens blank allowing the intermediate geometrical parameter value of the ophthalmic lens (L1, L2) to be within the range of the geometrical parameter values.

4. Calculation module (202) according to any one of the claims 1 to 3,
the plurality being a first plurality,
each of the semi-finished lens blanks of the first plurality having a same refractive index,
the geometrical parameter value of the ophthalmic lens (L1, L2) being a first geometrical parameter value of the ophthalmic lens (L1, L2),
the calculation module (202) being also configured to :
- determine a second geometrical parameter value of the lens (L1, L2) to be manufactured from the second test semi-finished lens blank of the first plurality,
when the second geometrical parameter value of the ophthalmic lens (L1, L2) is outside the range of the geometrical parameter values the calculation module (202) is also configured to:
- select a test semi-finished lens blank of a second plurality of semi-finished lens blanks, each of the semi-finished lens blanks of the second plurality having a same refractive index, the refractive index of the second plurality being greater than the refractive index of the first plurality, the base-curve of the test semi-finished lens blank of the second plurality being close to the base-curve of the second test semi-finished lens blank of the first plurality,
the adapted semi-finished lens blank being the test semi-finished lens blank of the second plurality.

5. Calculation module (202) according to any one of the claims 1 to 3,
the plurality being a first plurality,
each of the semi-finished lens blanks of the first plurality having a same refractive index,
the geometrical parameter value of the ophthalmic lens (L1, L2) being a first geometrical parameter value of the ophthalmic lens (L1, L2),
the calculation module (202) being also configured to :
- determine a second geometrical parameter value of the lens (L1, L2) to be manufactured from the second semi-finished lens blank of the first plurality,
when the second geometrical parameter value of the ophthalmic lens (L1, L2) is outside the range of the geometrical parameter values and the base-curve of the second test semi-finished lens blank of the first plurality is greater than a base-curve threshold the calculation module (202) being also configured to:
- select a test semi-finished lens blank of a second plurality of semi-finished lens blanks, each of the semi-finished lens blanks of the second plurality having a same refractive index, the refractive index of the second plurality being greater than the refractive index of the first plurality, the base-curve of the test semi-finished lens blank of the second plurality being close to the base-curve of the second test semi-finished lens blank of the first plurality,
the adapted semi-finished lens blank being the semi-finished lens blank of the second plurality.

6. Calculation module (202) according to the claim 5,
the base-curve threshold being egal to a base of the frame (F) plus 2 dioptres.

7. Calculation module (202) according to any one of the claims 4 to 6,
the calculation module (202) being also configured to:
- select sequentially a test semi-finished lens blank of another plurality of semi-finished lens blanks, each of the semi-finished lens blanks of the another plurality having a same refractive index, the refractive index of the another plurality being superior to the refractive index of the previous plurality, the base-curve of the semi-finished lens blank of the another plurality being close to the base-curve of the second test semi-finished lens blank of the first plurality,
- determine an intermediate geometrical parameter value of the lens (L1, L2) to be manufactured from the intermediate semi-finished lens blank of the another plurality,
- repeat select and determine until the intermediate geometrical parameter value of
the ophthalmic lens (L1, L2) is within the range of the geometrical parameter values, the adapted semi-finished lens blank being the intermediate semi-finished lens blank allowing the intermediate geometrical parameter value of the ophthalmic lens (L1, L2) to be within the range of the geometrical parameter values.

8. Calculation module (202) according to the claim 1,
the plurality being a first plurality,
the calculation module (202) comprising a machine learning model previously trained with data of a second plurality of semi-finished lens blank for manufacturing the ophthalmic lens (L1, L2) each semi-finished lens blank of the second plurality being associated with a geometrical parameter value of the ophthalmic lens (L1, L2),
the calculation module (202) being configured:
- to use the machine learning model to determine for at least two semi-finished lens blanks of the first plurality a geometrical parameter value of the ophthalmic lens (L1, L2),
- to select the semi-finished lens blank of the first plurality associated with the optimal geometrical parameter value of the ophthalmic lens (L1, L2).

9. Calculation module (202) according to any one of the claims 1 to 8,
the geometric parameter being chosen among:
- a thickness of a border of the lens (L1, L2),
- a thickness of a central part of the lens (L1, L2),
- a thickness of a peripheral part of the lens (L1, L2),
- an average, a maximum value, a minimum value or a weighted sum of the thickness of the border of the lens (L1, L2), the central part of the lens (L1, L2 ) or the peripheral part of the lens (L1, L2),
- a base-curve deviation on the lens (L1, L2), the frame (F), or a bevel of the frame (F),
- a front distance,
- a back distance and
- an average, a maximum value, a minimum value, a weighted sum of the front distance or the back distance,
and/or the characteristic parameter being chosen among:
- a type of the frame (F),
- a size of the frame (F),
- a base of the frame (F),
- at least one parameter related to a mounting of the lens (L1, L2) inside a rim (R1, R2) of the frame (F),
- a mounting rule of the lens (L1, L2) inside the rim (R1, R2) and
- a tint of the lens (L1, L2).

10. Computer implemented method, for selecting an adapted semi-finished lens blank among a plurality of semi-finished lens blanks for manufacturing an ophthalmic lens (L1, L2) to be mounted in a frame (F) of an eyewear (EY),
the eyewear (EY) being intended to be worn by a user,
the method comprising:
- a step of determining (301) a geometrical parameter value of the ophthalmic lens (L1, L2) to be manufactured from a test semi-finished lens blank of the plurality, the geometrical parameter value of the ophthalmic lens (L1, L2) depending on a base-curve of the test semi-finished lens blank, a refractive index of the test semi-finished lens blank, a prescription of the user and/or a characteristic parameter value of the frame (F),
- a step of selecting the adapted semi-finished lens blank based on the geometrical parameter value of the ophthalmic lens (L1, L2).

11. Computer implemented method according to the claim 10,
the test semi-finished lens blank being a first test semi-finished lens blank,
when the geometrical parameter value of the ophthalmic lens (L1, L2) is outside the range of the geometrical parameter values, the step of selecting the adapted semi-finished lens blank comprises:
- a step of selecting (303) a second test semi-finished lens blank of the plurality, the base-curve of the first test semi-finished lens blank being greater than the base-curve of the second test semi-finished lens blank,
the adapted semi-finished lens blank being the second test semi-finished lens blank.

12. Computer implemented method according to the claim 11 also comprising:
- select sequentially an intermediate test semi-finished lens blank of the plurality in an decreasing order of a value of the base-curve,
- determine an intermediate geometrical parameter value of the ophthalmic lens (L1, L2) to be manufactured from the intermediate test semi-finished lens blank,
- repeat select and determine until the intermediate geometrical parameter value of
the ophthalmic lens (L1, L2) is within in the range of the geometrical parameter values, the adapted semi-finished lens blank being the intermediate semi-finished lens blank allowing the intermediate geometrical parameter value of the ophthalmic lens (L1, L2) to be within the range of the geometrical parameter values.

13. Computer implemented method according to the claim 11,
the plurality being a first plurality,
each of the semi-finished lens blanks of the first plurality having a same refractive index,
the geometrical parameter value of the ophthalmic lens (L1, L2) being a first geometrical parameter value,
the computer implemented method also comprising:
- a step of determining a second geometrical parameter value of the ophthalmic lens (L1, L2) to be manufactured from the second test semi-finished lens blank of the first plurality,
when the second geometrical parameter value of the ophthalmic lens (L1, L2) is outside the range of the geometrical parameter values the computer implemented method also comprising:
- a step of selecting (305) a test semi-finished lens blank of a second plurality of semi-finished lens blanks, each of the semi-finished lens blanks of the second plurality having a same refractive index, the refractive index of the second plurality being greater than the refractive index of the first plurality, the base-curve of the test semi-finished lens blank of the second plurality being close to the base-curve of the second test semi-finished lens blank of the first plurality,
the adapted semi-finished lens blank being the test semi-finished lens blank of the second plurality.

14. Computer implemented method according to the claim 11,
the plurality being a first plurality,
each of the semi-finished lens blanks of the first plurality having a same refractive index,
the geometrical parameter value of the ophthalmic lens (L1, L2) being a first geometrical parameter value of the ophthalmic lens (L1, L2),
the computer implemented method also comprising:
- a step of determining a second geometrical parameter value of the lens (L1, L2) to be manufactured from the second semi-finished lens blank of the first plurality,
when the second geometrical parameter value of the ophthalmic lens (L1, L2) is outside the range of the geometrical parameter values and the base-curve of the second test semi-finished lens blank of the first plurality is greater than a base-curve threshold, the computer implemented method also comprising:
- a step of selecting (305) a test semi-finished lens blank of a second plurality of semi-finished lens blanks, each of the semi-finished lens blanks of the second plurality having a same refractive index, the refractive index of the second plurality being greater than the refractive index of the first plurality, the base-curve of the test semi-finished lens blank of the second plurality being close to the base-curve of the second test semi-finished lens blank of the first plurality,
the adapted semi-finished lens blank being the semi-finished lens blank of the second plurality.

15. Computer implemented method according to the claims 13 or 14, also comprising:
- select sequentially a test semi-finished lens blank of another plurality of semi-finished lens blanks, each of the semi-finished lens blanks of the another plurality having a same refractive index, the refractive index of the another plurality being superior to the refractive index of the previous plurality, the base-curve of the semi-finished lens blank of the another plurality being close to the base-curve of the second test semi-finished lens blank of the first plurality,
- determine an intermediate geometrical parameter value of the lens (L1, L2) to be manufactured from the intermediate semi-finished lens blank of the another plurality,
- repeat select and determine until the intermediate geometrical parameter value of the ophthalmic lens (L1, L2) is within the range of the geometrical parameter values,
the adapted semi-finished lens blank being the intermediate semi-finished lens blank allowing the intermediate geometrical parameter value of the ophthalmic lens (L1, L2) to be within the range of geometrical parameter values.
